# FASCICULE DE BREVET EUROPEEN

(11) **EP 3 265 915 B1**
(45) Date de publication et mention de la délivrance du brevet: **08.09.2021**
(21) Numéro de dépôt: 16715002.8
(22) Date de dépôt: 04.03.2016
(51) Int. Cl.: G06F 11/34, G06F 30/20

(54) **DISPOSITIF DE SIMULATION**
SIMULATIONSVORRICHTUNG
SIMULATION DEVICE

(30) Priorité: 04.03.2015 FR 1551828
(43) Date de publication de la demande: 10.01.2018
(73) Titulaire: INRIA - Institut National de Recherche en Informatique et en Automatique, 78150 Le Chesnay (FR)
(72) Inventeur: CUCU-GROSJEAN, Liliana, 78000 Versailles (FR); GOGONEL, Adriana, 92350 Le Plessis Robinson (FR)
(74) Mandataire: Cabinet Netter
(86) Numéro de dépôt international: PCT/FR2016/050504
(87) Numéro de publication internationale: WO 2016/139436

(56) Documents cités:
- YUE LU ET AL: "A Statistical Response-Time Analysis of Real-Time Embedded Systems", REAL-TIME SYSTEMS SYMPOSIUM (RTSS), 2012 IEEE 33RD, IEEE, 4 décembre 2012 (2012-12-04), pages 351-362, XP032323089, DOI: 10.1109/RTSS.2012.85 ISBN: 978-1-4673-3098-5
- LIU MENG ET AL: "Applying the peak over thresholds method on worst-case response time analysis of complex real-time systems", PROCEEDINGS OF THE 12TH IEEE INTERNATIONAL CONFERENCE ON EMBEDDED AND REAL-TIME COMPUTING SYSTEMS AND APPLICATIONS, IEEE COMPUTER SOCIETY, PISCATAWAY, NJ, USA, 19 août 2013 (2013-08-19), pages 22-31, XP032562492, ISSN: 1533-2306, DOI: 10.1109/RTCSA.2013.6732200 [extrait le 2014-02-04]
- HANSEN J ET AL: "Statistically-based WCET estimation and validation", WORST-CASE EXECUTION TIME ANALYSIS : PROCEEDINGS OF THE 9TH INTERNATIONAL WORKSHOP WCET 2009; 9TH INTERNATIONAL WORKSHOP ON WORST-CASE EXECUTION TIME (WCET) ANALYSIS, NIKLAS HOLSTI, AT; DUBLIN, IRELAND, vol. 2009, 1 janvier 2009 (2009-01-01), pages 130-140, XP008158275, ISBN: 978-3-85403-252-6 cité dans la demande

## Description

L'invention concerne le domaine de la conception des systèmes embarqués et la simulation de leur fonctionnement.

Plus particulièrement, l'invention trouve son application dans la conception des systèmes embarqués critiques. Les systèmes embarqués critiques présentent la particularité d'être conçus de manière à ne connaître aucune faille et/ou pour présenter une très haute tolérance en cas d'apparition d'une faille. Par exemple, les ressources de ces systèmes sont doublées, triplées, voire décuplées, de manière à assurer une redondance en cas de panne d'un des éléments, ainsi que pour s'assurer que tous les calculs que ces systèmes sont chargés de réaliser sont terminés dans les temps souhaités.

Historiquement, la progression technologique a été suffisante pour combler la complexification croissante de ces systèmes. En d'autres termes, l'accroissement de puissance disponible pour les processeurs des systèmes embarqués rendait la conception simple : il suffisait de surdimensionner le pilote avec un coefficient important pour garantir l'intégrité de tous les systèmes embarqués, qu'il s'agisse d'avionique, d'aérospatiale, d'automobile ou de ferroviaire.

Dans les années récentes, deux effets combinés ont changé ce paradigme.

D'une part, bien que les puissances des pilotes continuent de s'accroître de manière régulière, cette croissance s'est ralentie et tend à se ralentir encore plus au fur et à mesure que la finesse de gravure augmente. Cela est accru par le fait que la consommation électrique et la chaleur dégagée sont des critères qui sont devenus cruciaux, alors que cela n'était pas le cas pour les anciens pilotes.

D'autre part, de grands progrès ont été réalisés en termes de modélisation physique et d'application pratique des systèmes embarqués, et les applications de ceux-ci exigent une puissance de calcul qui s'est grandement accrue, et qui tend à s'accroître plus vite que l'accroissement de la puissance des processeurs.

Il existe donc un besoin de produire un dispositif qui permet de mieux dimensionner les besoins en puissance de calcul des systèmes embarqués.

À cet effet, l'invention propose un dispositif selon la revendication 1.

Ce dispositif est avantageux car il permet de déterminer une courbe de Gumbel qui approche de manière fidèle la loi de distribution du jeu de données de la mémoire.

Dans divers modes de réalisation particuliers, le dispositif peut présenter l'une ou la combinaison de plusieurs des caractéristiques suivantes :
- le pilote est agencé pour déterminer une taille représentant le nombre de mesures dans le jeu de données, et pour appeler le sélecteur avec une pluralité de nombres de type 10*k, où k est un entier naturel compris entre 1 et la partie entière de la taille divisée par quarante, et
- le pilote est en outre agencé pour retourner la valeur ou la probabilité la plus importante déterminée par chaque fonction extrême.

D'autres caractéristiques et avantages de l'invention apparaîtront mieux à la lecture de la description qui suit, tirée d'exemples donnés à titre illustratif et non limitatif, illustrés par des dessins sur lesquels :
- la figure 1 représente un schéma générique d'un dispositif selon l'invention, et
- la figure 2 représente un exemple de réalisation d'une fonction mise en œuvre par le dispositif de la figure 1.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Pour garantir l'intégrité d'un système embarqué, il convient de garantir que celui-ci réalisera les tâches et/ou calculs que l'on lui demande dans un temps maximal imparti.

Pour cela, la demanderesse a découvert que la théorie des valeurs extrêmes (EVT pour « Extreme Values Theory » en anglais) pouvait être utile. En effet, cette théorie vise à permettre l'étude du comportement des parties supérieures et inférieures d'une loi de distribution dont la fonction de distribution est inconnue. L'invention vise donc à utiliser l'EVT pour déterminer le comportement extrême d'un pilote vis-à-vis d'une tâche donnée, et d'en déduire le dimensionnement adapté pour un système embarqué. Certains travaux ont déjà été entrepris dans ce domaine, c'est-à-dire l'estimation d'un temps d'exécution (pire-cas) d'un programme ou d'une tâche. Les travaux les plus significatifs ont été réalisés par Edgar et al ("Statistical analysis of WCET for "scheduling", 22nd IEEE Real-Time Systems Symposium (RTSS01), 2001), Hansen et al ("Statistical-based wcet estimation and validation", 9th International Workshop on Worst-Case Execution Time (WCET) Analysis, 2009), Y Lu et al ("A new way about using statistical analysis ofworst-case execution times", ACM SIGBED Review, 2011), Y LU ET AL ("A Statistical Response-Time Analysis of Real-Time Embedded Systems",REAL-TIME SYSTEMS SYMPOSIUM (RTSS), 2012), L MENG ET AL ("Applying the peak over thresholds method on worst-case response time analysis of complex real-time systems",PROCEEDINGS OF THE 12TH IEEE INTERNATIONAL CONFERENCE ON EMBEDDED AND REAL-TIME COMPUTING SYSTEMS AND APPLICATIONS, 2013) et Cucu-Grosjean et al ("Measurement-based probabilistic timing analysis for multi-pathprograms", 24th Euromicro Conférence on Real-time Systems (ECRTS), 2012). Ces travaux s'appuient sur une version appelée GEV (valeur extrême généralisée) de l'EVT. Cette version de l'EVT vise à approcher la partie supérieure d'une loi de distribution au moyen d'une famille de courbes appelées courbes de Gumbel. Toute la difficulté est, à partir d'une distribution donnée, de déterminer quelle est la courbe de Gumbel qui correspond à cette distribution.

À ce jour, aucune des solutions citées ci-dessus ne donne réellement satisfaction, ni une quelconque certitude quant à la qualité de la correspondance entre la courbe de Gumbel déterminée et la loi de la distribution.

Une autre version de l'EVT existe. Cette version s'appelle GPD (distribution de Pareto généralisée). Là encore, il s'agit d'associer une loi de distribution donnée dont la fonction de distribution est inconnue à une courbe de Pareto définie par la théorie GPD. Il n'existe à ce jour aucun document qui explique comment choisir une courbe GPD à partir d'une distribution donnée.

Au-delà de l'absence de solution satisfaisante pour modéliser une distribution inconnue de manière suffisamment certaine au moyen de la version GEV ou de la version GPD de l'EVT, il n'existe aucun document qui combine ces deux versions ensemble pour réaliser une telle détermination.

Le dispositif de l'invention, dans ses diverses variantes, vient combler ces manques.

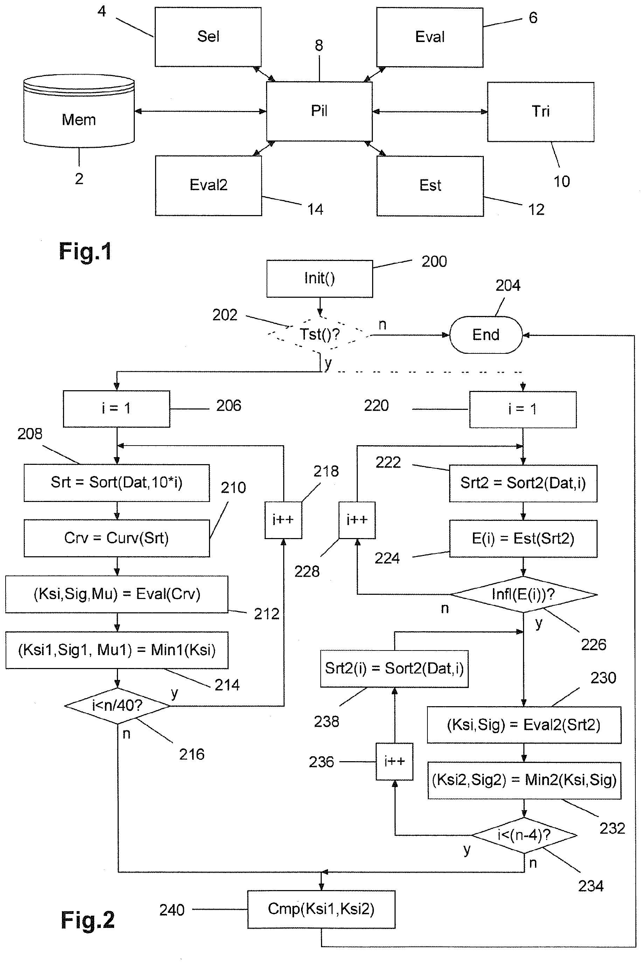

La figure 1 représente un schéma générique d'un dispositif de simulation selon l'invention. Le dispositif comprend une mémoire 2, un sélecteur 4, un évaluateur 6, un pilote 8, un trieur 10, un estimateur 12 et un second évaluateur 14.

Dans le cadre de l'invention, la mémoire 2 peut être tout type de stockage de données propre à recevoir des données numériques : disque dur, disque dur à mémoire flash (SSD en anglais), mémoire flash sous toute forme, mémoire vive, disque magnétique, stockage distribué localement ou dans le cloud, etc. Les données calculées par le dispositif peuvent être stockées sur tout type de mémoire similaire à la mémoire 2, ou sur celle-ci. Ces données peuvent être effacées après que le dispositif ait effectué ses tâches ou conservées.

Les 5 unités fonctionnelles (le sélecteur 4, l'évaluateur 6, le pilote 8, le trieur 10, l'estimateur 12 et le second évaluateur 14) peuvent être réunies au sein d'un même boîtier, sous la forme d'un ou plusieurs pilotes ou circuits intégrés spécialisés pour réaliser leurs fonctions, ou encore sous la forme de code informatique exécuté sur une ou plusieurs machines informatiques reliées entre elles pour la réalisation du dispositif, ou sous toute forme intermédiaire entre ces types de réalisation.

La mémoire 2 reçoit un jeu de données représentant des mesures d'un paramètre dont on cherche à évaluer la loi de distribution. Dans l'exemple décrit plus haut, ce jeu de données comprend divers temps d'exécution d'une tâche donnée par un pilote donné, et le but est de déterminer quel est le temps « pire-cas » que ce pilote pourra mettre pour exécuter cette tâche. Dans d'autres variantes, les données peuvent représenter un autre type de paramètre de mesure dont on cherche à évaluer une valeur extrême.

Le sélecteur 4 a pour fonction le réagencement des données du jeu de données en fonction d'un paramètre d'entrée. Plus précisément, le sélecteur 4 reçoit un entier naturel non nul comme paramètre, et accède au jeu de données stocké dans la mémoire 2 pour produire en sortie un ensemble de sous-jeux de données qui contiennent chacun un nombre de données égal au paramètre. Par exemple, si le paramètre a pour valeur 10 et que le jeu de données comprend 100 mesures, le sélecteur 4 retournera un ensemble de 10 sous-jeux de données comprenant chacun 10 mesures. Le sélecteur 4 peut être réalisé de très nombreuses manières, et être par exemple codé sous la forme d'une fonction informatique qui découpe le jeu de données en tranches de tailles égales. Les sous-jeux de données peuvent ensuite être utilisés pour définir une courbe qui est utilisée dans la version GEV de l'EVT.

Lorsque le nombre de mesures du jeu de données n'est pas divisible par 10, le sélecteur 4 fonctionne à l'identique jusqu'au dernier bloc, qui est traité avec un nombre de données inférieur.

L'évaluateur 6 a pour fonction la détermination d'un ou plusieurs paramètres d'une courbe de Gumbel à partir d'un jeu de données en entrée. Ces paramètres incluent un facteur de forme (communément désigné par la lettre grecque Xi dans l'EVT), un facteur d'échelle correspondant à la variance de la loi Gumbel (communément désigné par la lettre grecque Sigma dans l'EVT) et un facteur de localisation correspondant à la moyenne de la loi Gumbel (communément désigné par la lettre grecque Mu dans l'EVT). Dans l'exemple décrit ici, l'évaluateur 6 est une fonction dénommée gev.fit() qui est disponible dans le paquet « ismev » du langage de programmation R (langage de programmation dédié aux statistiques). Dans l'exemple décrit ici, la fonction gev.fit() détermine le facteur de forme, le facteur d'échelle et le facteur de localisation en les estimant par la méthode du maximum de vraisemblance. En variante, le facteur de forme, le facteur d'échelle et le facteur de localisation pourraient être déterminés par la méthode des moments.

Le second évaluateur 14 est similaire à l'évaluateur 6, sauf qu'il détermine une distribution de Pareto au lieu d'une courbe de Gumbel. Les paramètres produits incluent un facteur de forme (communément désigné par la lettre grecque Xi dans l'EVT), un facteur d'échelle (communément désigné par la lettre grecque Sigma dans l'EVT) et un facteur de localisation (communément désigné par la lettre grecque Mu dans l'EVT). Dans l'exemple décrit ici, le second évaluateur 14 est une fonction dénommée gpd.fit() qui est disponible dans le paquet « ismev » du langage de programmation R. Dans l'exemple décrit ici, la fonction gpd.fit() estime le facteur d'échelle et le facteur de localisation en les estimant par la méthode du maximum de vraisemblance. Le facteur de localisation est déterminé en amont comme on le verra plus bas. En variante, le facteur de forme et le facteur d'échelle pourraient être déterminés par la méthode des moments.

Le trieur 10 a pour fonction la production de sous-jeux de données dont les valeurs de mesures associées sont toutes supérieures à celles d'une valeur de référence reçue en entrée. Plus précisément, le trieur 10 reçoit une valeur comme paramètre et un jeu de données. Comme on le verra par la suite, c'est toujours le jeu de données de la mémoire 2 qui est utilisé comme jeu de données d'entrée. Celui-ci pourrait donc être désigné comme variable globale, et le trieur 10 pourrait ne recevoir que la valeur comme paramètre. Ainsi, si la valeur est 100, le trieur 10 retournera toutes les données du jeu de données dont la valeur est supérieure à 100. En variante, le trieur 10 pourrait également recevoir un entier naturel non nul qui indique l'indice d'une valeur du jeu de données trié par valeurs croissantes. Ainsi, le trieur 10 retournerait le sous-jeu de données qui contient toutes les données supérieures à la valeur de mesure désignée par l'indice reçu comme paramètre.

L'estimateur 12 a pour fonction la détermination de l'espérance mathématique qu'une mesure du jeu de données soit supérieure à une mesure choisie du jeu de données. Comme on le verra, le pilote 8 parcourt le jeu de données pour faire calculer par l'estimateur 12 cette espérance par valeur croissante du jeu de données, et pour calculer une liste de valeurs d'espérance correspondante. Cette liste de valeurs d'espérance décrit une courbe qui est utilisée dans la version GPD de l'EVT.

Le pilote 8 a pour fonction l'appel du sélecteur 4, de l'évaluateur 6, du trieur 10, de l'estimateur 12 et du second évaluateur 14 afin de mettre en œuvre la version GEV et éventuellement la version GPD de l'EVT afin de déterminer la fonction de l'EVT qui approche le mieux la distribution du jeu de données reçu dans la mémoire 2. Cette fonction de l'EVT permet en retour de déterminer quel est le temps d'exécution « pire-cas » par le processeur de la tâche qui a servi à générer le jeu de données. Ce temps d'exécution peut alors être utilisé pour améliorer le dimensionnement d'un système embarqué utilisant ce processeur et mettant en œuvre cette tâche. Comme on le verra dans ce qui suit, le dispositif peut même calculer, selon la variante, la précision avec laquelle la fonction de l'EVT approche le jeu de données.

En variante, le dispositif de l'invention peut être utilisé dans d'autres applications que la détermination de temps « pire-cas » d'une tâche par un processeur, dès lors qu'il s'agit d'étudier la prise de valeurs extrêmes d'un paramètre physique. Tout comme les autres éléments, le pilote 8 peut être réalisé de très nombreuses manières et être, par exemple, codé sous la forme d'une fonction informatique.

La figure 2 représente un exemple de fonction mise en œuvre par le pilote 8.

L'ensemble du code exécuté par la fonction de la figure 2 est dans l'exemple décrit ici codé en langage R. D'autres langages de programmation pourront être utilisés.

La fonction commence par une opération 200 par l'exécution d'une fonction Init(). Cette fonction initialise le dispositif et assure la présence du jeu de données dans la mémoire 2.

Ensuite, dans une opération 202 optionnelle, un test est réalisé par une fonction Tst(). La fonction Tst() met en œuvre un test E.T et I.I.D qui permet de déterminer si la distribution définie par le jeu de données reçu dans la mémoire 2 peut être approché par l'EVT ou pas. L'article de Garrido et al "Modelling of rare events and estimation of extreme quantiles, model selecting methods for distribution tails" PhD. Work, 2002 décrit ce test. Si ce n'est pas le cas, alors la fonction se termine en 204, avec une indication que le jeu de données ne peut pas être approché par l'EVT.

Sinon, l'exécution de la fonction se poursuit dans deux branches distinctes. La première branche, à gauche sur la figure 2, sert à réaliser une simulation par la version GEV de l'EVT, et la deuxième branche, à droite sur la figure 2, sert à réaliser une simulation par la version GPD de l'EVT.

La première branche commence dans une opération 206 par l'initialisation à 1 d'un indice i. Cet indice sert à définir plusieurs tailles de découpage du jeu de données par le sélecteur 4, afin de déterminer plusieurs courbes qui seront approchées.

Ensuite, une boucle commence dans laquelle le sélecteur 4 est appelé dans une opération 208 avec l'exécution d'une fonction Sort(). La fonction Sort() reçoit le jeu de données Dat reçu dans la mémoire 2 et l'indice i multiplié par 10 comme paramètres. Comme c'est toujours le jeu de données Dat de la mémoire 2 qui est utilisé comme jeu de données d'entrée, celui-ci pourrait donc être désigné comme variable globale dans la fonction Sort(), et le sélecteur 4 pourrait ne recevoir que l'indice i multiplié par 10 comme paramètre. Comme décrit plus haut, la fonction Sort() découpe le jeu de données Dat en un ensemble de jeux de données Srt qui contiennent chacun 10*i données.

Ensuite, dans une opération 210, le pilote 8 exécute une fonction Curv() qui va calculer des données de courbe à partir de l'ensemble de sous-jeux de données Srt calculé à l'opération 208. Pour cela, dans chaque sous-jeu de données de l'ensemble Srt, seule la valeur maximale est gardée, et les valeurs résultantes définissent ensemble des données de courbe Crv. Par exemple, pour l'indice i égal à 1, le jeu de données Dat a été découpé en sous-jeux de 10 valeurs. Avec l'exécution de la fonction Curv(), seule la plus grande des 10 valeurs des données de chaque sous-ensemble de 10 données est conservée, pour former les données Crv.

Ainsi, l'accroissement de l'indice i par incrément de 10 permet, par la combinaison des opérations 208 et 210, de « découper» le jeu de données Dat en tranches d'épaisseur variable pour ne retenir que les extrema de ces tranches, et la variation de la taille des tranches permet de trouver le découpage qui permet de découvrir le plus d'extrema.

Ensuite, dans une opération 214, l'évaluateur 6 est appelé avec l'exécution d'une fonction Eval(), qui reçoit les données de courbes Crv comme paramètre. Comme décrit plus haut, dans l'exemple décrit ici, la fonction Eval() exécute la fonction gev_fit() du paquet « ismev » du langage de programmation R. En sortie de la fonction Eval(), les trois facteurs Ksi, Sig et Mu pour l'indice courant i sont retournés. Le facteur Ksi désigne le facteur de forme de la courbe de Gumbel associée à la distribution définie par les données de courbe Crv, le facteur Sig désigne le facteur d'échelle de cette même courbe de Gumbel, et le facteur Mu désigne le facteur de localisation. La fonction Eval() peut également calculer une valeur dite de convergence qui donne un indice de la fiabilité de l'estimation réalisée. En effet, les facteurs Ksi, Sig et Mu étant déterminés par la méthode du maximum de vraisemblance, la valeur de convergence permet d'indiquer si l'estimation est fiable ou pas.

Le facteur de forme Ksi est ensuite comparé au facteur de forme minimal Ksi 1 dans une opération 214 avec l'exécution d'une fonction Min1(). La fonction Min1() retourne le triplé de facteurs (Ksi1,Sig1,Mu1) calculé précédemment si Ksi est supérieur à Ksi1, et retourne (Ksi,Sig,Mu) comme nouveau couple (Ksi1,Sig1,Mu1) sinon. Ainsi, au fur et à mesure que l'indice i est incrémenté, le triplé (Ksi1,Sig1,Mu1) qui est calculé représente la courbe dont le facteur de forme Ksi est le plus petit parmi toutes les courbes Crv générées par les opérations 208 et 210. Selon la version GEV de l'EVT, cette courbe, dont le facteur de forme est le plus petit, représente la courbe de Gumbel qui a le plus de probabilité de représenter la distribution du jeu de données Dat.

Enfin, dans une opération 216, il est testé si l'indice i est inférieur à n/40 où n est le nombre de données du jeu de données Dat. Si i vaut n/40, alors l'ensemble Srt comprend 4 sous-jeux de données, et la valeur de n/40 permet d'assurer que le jeu de données Crv comprendra au moins 4 points. Si c'est le cas, alors l'indice i est incrémenté dans une opération 218, et la boucle reprend en 208. Sinon, la simulation par la version GEV de l'EVT est terminée, et la courbe de Gumbel qui est déterminée comme approchant le jeu de données est définie par le facteur de forme et le facteur d'échelle, Ksi et Sig1, qui ont été retenus après l'opération 216, ensemble avec le facteur de localisation qui leur correspond qui a été déterminé avec la fonction de l'opération 212.

En variante, la première branche pourrait être réalisée en sortant le calcul du triplé (Ksi1,Sig1,Mu1) de la boucle. De plus, la fonction Eval() pourrait ne renvoyer que le facteur de forme Ksi qui est le seul paramètre nécessaire pour identifier les données de courbes Crv (ou l'indice d'itération correspondant) qui représentent le meilleur découpage du jeu de données Dat pour déterminer la courbe de Gumbel qui correspond au jeu de données Dat.

La deuxième branche commence dans une première opération par l'initialisation à 1 d'un indice i dans une opération 220. L'indice i est utilisé pour parcourir le jeu de données Dat en appliquant une simulation adaptée à la version GPD de l'EVT.

La deuxième branche comprend deux boucles. La première boucle sert à déterminer un indice de départ pour la deuxième boucle, et la deuxième boucle détermine une distribution de Pareto qui correspond le mieux au jeu de données Dat.

La deuxième boucle commence dans une opération 222 par l'appel du trieur 10 avec l'appel d'une fonction Sort2(). La fonction Sort2() reçoit comme paramètre le jeu de données Dat reçu dans la mémoire 2, et l'indice courant i. Comme on l'a vu plus haut, le jeu de données Dat étant systématiquement appelé comme variable, il pourrait être passé comme variable globale, et la fonction Sort2() pourrait ne recevoir que l'indice i comme paramètre. Dans un premier temps, la fonction Sort2() détermine dans le jeu de données Dat des données de référence dont la valeur de mesure a pour rang l'indice i lorsque les données du jeu de données Dat sont triées par valeur croissante de mesure. Dans un second temps, la fonction Sort2() sélectionne dans le jeu de données Dat toutes les données dont les valeurs de mesure sont supérieures à la valeur de mesure des données de référence dans un sous-jeu de données Srt2. La fonction Sort2() peut être programmée de très nombreuses manières, avec ou sans tri préalable du jeu de données Dat, par passage direct de la valeur des données de référence, etc.

Ensuite la boucle se poursuit dans une opération 224 avec l'appel de l'estimateur 12 qui exécute une fonction Est() qui reçoit le sous-jeu de données Srt2. Comme décrit plus haut, la fonction Est() calcule l'espérance du sous-jeu de données Srt2, c'est-à-dire l'espérance que des données du jeu de données Dat présente une valeur de mesure supérieure à la valeur de mesure des données de référence de l'instance i de la première boucle. Cela peut être réalisé avec toute fonction classique de calcul de l'espérance mathématique, et le résultat est stocké dans un tableau E[] qui reçoit toutes les valeurs d'espérance, à l'indice i.

Enfin la première boucle se poursuit avec un test Infl() dans une opération 226. Ce test vise à déterminer si la courbe d'espérance définie par les valeurs du tableau E[] est sensiblement linéaire, ou si l'espérance E[] présente une inflexion. En effet, la version GPD de l'EVT enseigne que la distribution permettant de déterminer la distribution de Pareto est contenue dans la partie de la courbe d'espérance qui n'est pas linéaire. Le test Infl() peut être réalisé de manière automatisée, par exemple en calculant la dérivée première ou seconde de la courbe d'espérance à chaque itération et en déterminant l'inflexion dès que la dérivée première n'est plus constante ou que la dérivée seconde est non nulle, ou encore à la main, par représentation graphique de la courbe d'espérance sur un affichage, et entrée d'une décision d'arrêt ou pas. S'il est déterminé qu'il n'y a pas d'inflexion, alors la première boucle reprend, avec l'incrémentation de l'indice i dans une opération 228, puis la répétition de la boucle avec l'opération 222.

La première boucle permet de déterminer de manière la plus rapide l'indice des données dont la valeur de mesure indique l'inflexion de la courbe d'espérance, également appelée mesure d'arrêt. La première boucle décrite ici ne parcourt pas tout le jeu de données Dat : elle s'arrête dès qu'une inflexion est détectée. Une certaine tolérance pourra être prévue pour la détection de la mesure d'arrêt, afin d'éviter de s'arrêter « trop tôt » dans un minimum local. La mesure d'arrêt qui est ainsi déterminée définit la valeur du facteur de localisation pour la courbe de Gumbel qui sera déterminée à la fin de la deuxième boucle.

En variante, la première boucle pourrait parcourir toutes les données du jeu de données pour établir une courbe d'espérance complète, et ainsi prendre une décision plus sûre sur la mesure d'arrêt.

Une fois la mesure d'arrêt déterminée, la deuxième boucle commence. Elle est assez similaire à la boucle de la première branche. Ainsi, on va parcourir le jeu de données Dat à partir de la mesure d'arrêt, calculer des distributions de Pareto pour une pluralité de sous-jeux de données, et choisir la distribution dont le facteur de forme est le plus faible.

Ainsi, dans une opération 230, le second évaluateur 14 est appelé pour exécuter une fonction Eval2() qui reçoit le sous-jeu de données Srt2 comme paramètre. Cette fonction est similaire en principe à la fonction Eval() au détail près qu'elle est adaptée à la version GPD de l'EVT. Comme pour l'opération 212, la fonction Eval2() retourne un couple (Ksi,Sig). Ici, la fonction Eval2() ne retourne pas de facteur de localisation car il a été déterminé avec l'opération 226. La fonction Eval2() peut également calculer une valeur dite de convergence qui donne un indice de la fiabilité de l'estimation réalisée. En effet, les facteurs Ksi, Sig et Mu étant déterminés par la méthode du maximum de vraisemblance, la valeur de convergence permet d'indiquer si l'estimation est fiable ou pas.

Ensuite, dans une opération 232, le couple (Ksi,Sig) est comparé à un couple (Ksi2,Sig2) avec l'exécution d'une fonction Min2(). La fonction Min2() retourne le couple (Ksi2,Sig2) calculé précédemment si Ksi est supérieur à Ksi2, et retourne (Ksi,Sig) comme nouveau couple (Ksi2,Sig2) sinon. Ainsi, au fur et à mesure que l'indice i est incrémenté, le couple (Ksi2,Sig2) qui est calculé représente la courbe dont le facteur de forme Ksi est le plus petit parmi tous les sous-jeux de données Srt2. Selon la version GPD de l'EVT, cette distribution, dont le facteur de forme est le plus petit, représente la distribution de Pareto qui a le plus de probabilité de représenter la distribution du jeu de données Dat.

Ensuite, dans une opération 234, un test détermine si l'indice i est inférieur au nombre n de données du jeu moins 4. Ce test permet de garantir que le sous-jeu de données Srt2 utilisé pour déterminer la distribution de Pareto évaluée dans l'opération 230 contient au moins 4 points.

Si c'est le cas, la deuxième boucle reprend avec l'incrémentation de l'indice i dans une opération 236, et le calcul du sous-jeu de données Srt2 pour ce nouvel indice i avec l'appel du trieur 10 dans une opération 238 identique à l'opération 222. Dans l'exemple décrit ici, l'opération 238 est disposée à cet endroit car, lors de la première exécution de la deuxième boucle, le sous-jeu de données Srt2 pour la mesure d'arrêt avait déjà été déterminé, et qu'il n'était donc pas nécessaire de le refaire. Néanmoins, l'opération 238 pourrait être placée en tête de la deuxième boucle, et le sous-jeu de données Srt2 être déterminé à nouveau.

En variante, la première branche pourrait être réalisée en sortant le calcul du couple (Ksi2,Sig2) de la boucle. De plus, la fonction Eval2() pourrait également calculer le facteur de localisation de la distribution de Pareto, ou inversement ne renvoyer que le facteur de forme Ksi qui est le seul paramètre nécessaire pour identifier le sous-jeu de données Srt2 (ou l'indice d'itération correspondant) qui représente le meilleur découpage du jeu de données Dat pour déterminer la distribution de Pareto qui correspond au jeu de données Dat.

La première branche et la deuxième branche peuvent être réalisées en série ou en parallèle. De même les calculs au sein de ces branches pourront être sérialisés ou mis en parallèle lorsque possible.

Dans un mode de réalisation non couvert par les revendications, la deuxième branche est dans l'exemple décrit ici optionnelle (d'où la flèche en traits tiretés entre le test de l'opération 202 et la première opération 220 de la deuxième branche) : le dispositif peut calculer la courbe de Gumbel selon la première branche uniquement.

Néanmoins, la Demanderesse a découvert que l'exécution des deux branches pouvait être très avantageuse. En effet, elle a découvert qu'en combinant la détermination par la version GEV et GPD de l'EVT, il est possible non seulement déterminer la courbe de Gumbel ou distribution de Pareto qui s'approche le plus de la distribution du jeu de données Dat reçu dans la mémoire 2, mais il est également possible de déterminer la précision absolue avec laquelle celle-ci est approchée.

Ainsi, lorsque la première branche et la deuxième branche sont exécutées, une fonction Cmp() est exécutée dans une dernière opération 240. La fonction Cmp() permet d'utiliser les deux courbes de Gumbel qui ont été déterminées par les calculs précédents afin de simuler le comportement recherché.

Ensuite, la fonction Cmp() détermine la fonction de répartition des deux courbes de Gumbel déterminées pour la version GEV d'une part et pour la version GPD d'autre part. Ensuite, la fonction Cmp() définit, pour chacune de la version GEV et de la version GPD, une fonction extrême qui représente la probabilité inverse de la fonction de répartition (c'est-à-dire définie par g = 1-f si f est la fonction de répartition).

Ainsi, si ce qui est recherché est de connaître la valeur « pire cas » pour une probabilité donnée, alors la fonction Cmp() détermine pour chaque fonction extrême la valeur extrême qui correspond à la probabilité reçue comme variable. Enfin, la fonction Cmp() renvoie la valeur la plus importante. Ainsi, la fonction Cmp() renvoie la valeur la plus conservatrice tout en étant sûr d'avoir convergé en utilisant à la fois la version GEV et la version GPD de l'EVT.

En variante, si c'est au contraire une probabilité qui est recherchée pour une valeur extrême donnée, la fonction Cmp() détermine pour chaque fonction extrême la probabilité qui correspond à la valeur extrême fournie en entrée. Ici encore, la probabilité la plus importante est renvoyée afin d'être aussi conservateur que possible.

Dans encore une autre variante, la fonction Cmp() peut renvoyer une fonction qui correspond à une composition entre la fonction extrême de la fonction de répartition tirée de la version GEV et celle tirée de la version GPD. En effet, comme il est souhaité de renvoyer une valeur conservatrice, la fonction Cmp() calcule la fonction de répartition pour la version GEV et pour la version GPD, en tire chaque fonction extrême respective, et définit une nouvelle fonction dont la valeur pour chaque point est définie comme le maximum de ces fonctions inverses. Ainsi, il sera possible d'utiliser cette fonction conservatrice à loisir.

Dans ce qui précède, les déterminations ont été décrites en référence à un facteur de forme dont la valeur la plus faible indique la probabilité de correspondance la plus forte avec la GEV et/ou la GPD.

## Revendications

1. Dispositif de simulation de prise de valeurs extrêmes d'un temps d'exécution par un processeur d'un système embarqué comprenant une mémoire (2) recevant un jeu de données représentant des mesures de temps d'exécution d'une tâche donnée par un processeur d'un système embarqué, un sélecteur (4) capable de produire un ensemble de sous-j eux de données à partir du jeu de données, chaque sous-j eu de données de cet ensemble comprenant des données successives du jeu de données dont le nombre est un entier naturel reçu comme variable par le sélecteur (4), un évaluateur (6) capable, à partir d'un ensemble de valeurs définissant une courbe, de calculer un facteur de forme, un facteur d'échelle et un facteur de localisation indiquant une probabilité de correspondance entre la courbe définie par l'ensemble de valeurs et une courbe de Gumbel qui a le plus de probabilité de représenter la distribution du jeu de données, un estimateur (12) capable de calculer une valeur représentative de l'espérance qu'une mesure du jeu de données soit supérieure à une valeur reçue en entrée, un trieur (10) capable, à partir d'un jeu de données représentant des mesures d'un paramètre et d'une valeur reçus en entrée, de générer un sous-jeu de données tirées du jeu de données reçu en entrée et dont les mesures associées sont supérieures à la valeur reçue en entrée, un second évaluateur (14) capable, à partir d'un sous-jeu de données définissant une distribution, de calculer un facteur de forme et un facteur d'échelle indiquant une probabilité de correspondance entre la distribution définie par le sous-jeu de données et une distribution de Pareto généralisée, et un pilote (8) agencé d'une part pour
- appeler le sélecteur (4) avec une pluralité de nombres pour générer une pluralité d'ensembles de sous-jeux de données,
- dans chaque sous-jeu de données de chaque ensemble de sous-jeux de données, sélectionner les données dont la valeur de mesure est la plus importante, et créer une pluralité de jeux de données de courbe en associant les données sélectionnées de chaque ensemble,
- appeler l' évaluateur (6) avec la pluralité de jeux de données de courbe, et sélectionner le jeu de données de courbe dont le facteur de forme indique la probabilité la plus importante, et
- calculer une fonction extrême correspondant à la probabilité inverse de la fonction de répartition tirée d'une courbe de Gumbel définie par le facteur de forme correspondant au jeu de courbes sélectionné et par le facteur d'échelle et le facteur de localisation associés et déterminer une probabilité à partir d'une valeur de temps d'exécution pire-cas reçue en entrée ou une valeur de temps d'exécution pire-cas à partir d'une probabilité reçue en entrée à partir de la fonction extrême, permettant le dimensionnement du processeur d'un système embarqué ,
le pilote (8) étant agencé d'autre part pour
- parcourir le jeu de données par valeur croissante des mesures associées,
- pour appeler à chaque fois le trieur (10) avec le jeu de données et la valeur,
- pour appeler l'estimateur (12) avec le sous-jeux de données résultant et la valeur pour calculer une pluralité de valeurs d'espérance,
- pour analyser la pluralité de valeurs d'espérance et déterminer une mesure d'arrêt du jeu de données à partir de laquelle la courbe formée par la pluralité de valeurs d'espérance présente une inflexion,
- pour parcourir le jeu de données par valeur croissante des mesures associées à partir de la valeur associée à la mesure d'arrêt,
- pour appeler à chaque fois le trieur (10) avec le jeu de données et la valeur,
- pour appeler le second évaluateur (14) avec la pluralité de sous-jeux de données résultante,
- pour sélectionner le sous-jeu de données dont le facteur de forme indique la probabilité la plus importante,
- pour calculer une fonction correspondant à la probabilité inverse de la fonction de répartition tirée d'une courbe de Gumbel définie par le facteur de forme correspondant au sous-jeu de données sélectionné, par le facteur d'échelle associé, et par un facteur de localisation défini par la mesure d'arrêt, et
- pour déterminer une probabilité à partir d'une valeur de temps d'exécution pire-cas reçue en entrée ou une valeur de temps d'exécution pire-cas à partir d'une probabilité reçue en entrée à partir de la fonction extrême, permettant le dimensionnement du processeur d'un système embarqué.

2. Dispositif selon la revendication 1, dans lequel le pilote (8) est agencé pour déterminer une taille représentant le nombre de mesures dans le jeu de données, et pour appeler le sélecteur avec une pluralité de nombres de type 10*k, où k est un entier naturel compris entre 1 et la partie entière de la taille divisée par quarante.

3. Dispositif selon l'une des revendications précédentes, dans lequel le pilote (8) est en outre agencé pour retourner la valeur de temps d'exécution pire-cas ou la probabilité la plus importante déterminée par chaque fonction extrême.

## Patentansprüche

1. Vorrichtung zur Simulation einer Aufnahme von Extremwerten von einer Ausführungszeit durch einen Prozessor eines eingebetteten Systems, umfassend einen Speicher (2), der einen Datensatz empfängt, der Messungen von Ausführungszeiten einer durch einen Prozessor eines eingebetteten Systems gegebenen Aufgabe darstellt, einen Selektor (4), der eine Menge von Datenteilsätzen ausgehend von dem Datensatz produzieren kann, wobei jeder Datenteilsatz dieser Menge aufeinanderfolgende Daten des Datensatzes umfasst, deren Anzahl eine ganze Zahl ist, die als eine Variable von dem Selektor (4) empfangen wird, einen Evaluator (6), der ausgehend von einer Menge von Werten, die eine Kurve definieren, einen Formfaktor, einen Skalierungsfaktor und einen Lokalisierungsfaktor berechnen kann, die eine Wahrscheinlichkeit einer Entsprechung zwischen der durch die Menge von Werten definierten Kurve und einer Gumbel-Kurve angeben, die die höchste Wahrscheinlichkeit eines Darstellens der Verteilung des Datensatzes aufweist, einen Schätzer (12), der einen Wert berechnen kann, der die Erwartung darstellt, dass eine Messung des Datensatzes höher als ein am Eingang empfangener Wert ist, einen Sortierer (10), der ausgehend von einem Datensatz, der Messungen eines Parameters darstellt, und einem Wert, die am Eingang empfangen werden, einen Datenteilsatz erzeugen kann, der aus dem am Eingang empfangenen Datensatz gezogen wird und dessen assoziierten Messungen höher als der am Eingang empfangene Wert ist, einen zweiten Evaluator (14), der ausgehend von einem Datenteilsatz, der eine Verteilung definiert, einen Formfaktor und einen Skalierungsfaktor berechnen kann, die eine Wahrscheinlichkeit einer Entsprechung zwischen der durch den Datenteilsatz definierten Verteilung und einer allgemeinen Pareto-Verteilung angeben, und eine Steuerung (8), die einerseits eingerichtet ist zum
- Aufrufen des Selektors (4) mit einer Vielzahl von Zahlen, um eine Vielzahl von Mengen von Datenteilsätzen zu erzeugen,
- in jedem Datenteilsatz von jeder Menge von Datenteilsätzen Auswählen der Daten, deren Messwert der höchste ist, und Erstellen einer Vielzahl von Kurvendatensätzen durch Assoziieren der ausgewählten Daten von jeder Menge,
- Aufrufen des Evaluators (6) mit der Vielzahl von Kurvendatensätzen und Auswählen des Kurvendatensatzes, dessen Formfaktor die höchste Wahrscheinlichkeit angibt, und
- Berechnen einer Extremfunktion, die der inversen Wahrscheinlichkeit der Verteilungsfunktion entspricht, die aus einer Gumbel-Kurve gezogen wird, die durch den Formfaktor, der dem ausgewählten Kurvensatz entspricht, und durch den assoziierten Skalierungsfaktor und den assoziierten Lokalisierungsfaktor definiert wird, und Bestimmen einer Wahrscheinlichkeit ausgehend von einem am Eingang empfangenen ungünstigsten Ausführungszeitwert oder einem ungünstigsten Ausführungszeitwert ausgehend von einer am Eingang empfangenen Wahrscheinlichkeit ausgehend von der Extremfunktion, was die Dimensionierung des Prozessors eines eingebetteten Systems ermöglicht,
wobei die Steuerung (8) andererseits eingerichtet ist zum
- Durchlaufen des Datensatzes durch einen ansteigenden Wert der assoziierten Messungen,
- zum Aufrufen des Sortierers (10) jedes Mal mit dem Datensatz und dem Wert,
- zum Aufrufen des Schätzers (12) mit dem resultierenden Datenteilsatz und dem Wert zum Berechnen einer Vielzahl von Erwartungswerten,
- zum Analysieren der Vielzahl von Erwartungswerten und Bestimmen einer Stoppmessung des Datensatzes, ab der die durch die Vielzahl von Erwartungswerten gebildete Kurve eine Biegung zeigt,
- zum Durchlaufen des Datensatzes durch einen ansteigenden Wert der assoziierten Messungen ausgehend von dem mit der Stoppmessung assoziierten Wert,
- zum Aufrufen des Sortierers (10) jedes Mal mit dem Datensatz und dem Wert,
- zum Aufrufen des zweiten Evaluators (14) mit der resultierenden Vielzahl von Datenteilsätzen,
- zum Auswählen des Datenteilsatzes, dessen Formfaktor die höchste Wahrscheinlichkeit angibt,
- zum Berechnen einer Funktion, die der inversen Wahrscheinlichkeit der Verteilungsfunktion entspricht, die aus einer Gumbel-Kurve gezogen wird, die durch den Formfaktor, der dem ausgewählten Datenteilsatz entspricht, durch den assoziierten Skalierungsfaktor und durch einen durch die Stoppmessung definierten Lokalisierungsfaktor definiert wird, und
- zum Bestimmen einer Wahrscheinlichkeit ausgehend von einem am Eingang empfangenen ungünstigsten Ausführungszeitwert oder einem ungünstigsten Ausführungszeitwert ausgehend von einer am Eingang empfangenen Wahrscheinlichkeit ausgehend von der Extremfunktion, was die Dimensionierung des Prozessors eines eingebetteten Systems ermöglicht.

2. Vorrichtung nach Anspruch 1, wobei die Steuerung (8) zum Bestimmen einer Größe, die die Anzahl von Messungen in dem Datensatz darstellt, und zum Aufrufen des Selektors mit einer Vielzahl von Anzahlen vom Typ 10*k, wobei k eine ganze Zahl ist, die zwischen 1 und dem ganzen Teil der Größe dividiert durch vierzig liegt.

3. Vorrichtung nach einem der vorhergehenden Ansprüche, wobei die Steuerung (8) weiterhin zum Zurücksenden des ungünstigsten Ausführungszeitwerts oder der durch jede Extremfunktion bestimmten höchsten Wahrscheinlichkeit.

## Claims

1. A simulation device of taking extreme values of an execution time by a processor of an embedded system comprising a memory (2) receiving a dataset representing measurements of execution times of a task given by a processor of an embedded system, a selector (4) capable of producing an assembly of data subsets starting from the dataset, each data subset of this assembly comprising successive data from the dataset whose number is a natural integer received as a variable by the selector (4), an evaluator (6) capable, based on a set of values defining a curve, of calculating a form factor, a scale factor and a localization factor indicating a probability of correspondence between the curve defined by the set of values and a Gumbel curve that has the highest probability of representing the distribution of the dataset, an estimator (12) capable of calculating a value representative of the expectation that a measurement from the dataset is greater than a value received at the input, a sorter (10) capable, starting from a dataset representing measurements of a parameter and from a value received at the input, of generating a data subset extracted from the dataset received at the input and whose associated measurements are greater than the value received at the input, a second evaluator (14) capable, starting from a data subset defining a distribution, of calculating a form factor and a scale factor indicating a probability of correspondence between the distribution defined by the data subset and a generalized Pareto distribution, and a controller (8) configured on the one hand for:
- calling up the selector (4) with a plurality of numbers for generating a plurality of assemblies of data subsets,
- within each data subset of each assembly of data subsets, selecting the data whose measurement value is the greatest, and creating a plurality of curve datasets by associating the data selected from each assembly,
- calling up the evaluator (6) with the plurality of curve datasets, and selecting the curve dataset whose form factor indicates the highest probability, and
- calculating an extremum function corresponding to the inverse probability of the distribution function extracted from a Gumbel curve defined by the form factor corresponding to the set of curves selected and by the associated scale factor and localization factor and determining a probability starting from a worst-case value of execution time received at the input of a worst-time value of execution time starting from a probability received at the input starting from the extreme function, allowing the dimensioning of the processor of an embedded system,
the controller (8) being configured on the other hand for
- browsing the dataset by increasing value of the associated measurements,
- each time for calling up the sorter (10) with the dataset and the value,
- for calling up the estimator (12) with the resulting data subset and the value for calculating a plurality of expectation values,
- for analyzing the plurality of expectation values and determining a stopping measurement from the dataset starting from which the curve formed by the plurality of expectation values exhibits an inflexion,
- for browsing the dataset by increasing value of the associated measurements starting from the value associated with the stopping measurement,
- each time for calling up the sorter (10) with the dataset and the value,
- for calling up the second evaluator (14) with the resulting plurality of data subsets,
- for selecting the data subset whose form factor indicates the highest probability,
- for calculating a function corresponding to the inverse probability of the distribution function extracted from a Gumbel curve defined by the form factor corresponding to the data subset selected, by the associated scale factor, and by a localization factor defined by the stopping measurement, and
- for determining a probability starting from a worst-case value of execution time received at the input of a worst-time value of execution time starting from a probability received at the input starting from the extreme function, allowing the dimensioning of the processor of an embedded system.

2. The device as claimed in claim 1, in which the controller (8) is configured for determining a size representing the number of measurements in the dataset, and for calling up the selector with a plurality of numbers of the type 10*k, where k is a natural integer in the range between 1 and the integer part of the size divided by forty.

3. The device as claimed in one of the preceding claims, in which the controller (8) is furthermore configured for returning the greatest worst-case value of execution time or probability determined by each extremum function.
